# FASCICULE DE BREVET EUROPEEN

(11) **EP 4 124 521 B1**
(45) Date de publication et mention de la délivrance du brevet: **19.03.2025**
(21) Numéro de dépôt: 22187095.9
(22) Date de dépôt: 26.07.2022
(51) Int. Cl.: B60S 1/40

(54) **DISPOSITIF DE CONNEXION ENTRE BALAI D' ESSUYAGE ET BRAS D' ENTRAÎNEMENT**
VERBINDUNGSVORRICHTUNG ZWISCHEN WISCHBLATT UND ANTRIEBSARM
CONNECTION DEVICE BETWEEN A WIPER BLADE AND A DRIVE ARM

(30) Priorité: 30.07.2021 FR 2108310
(43) Date de publication de la demande: 01.02.2023
(73) Titulaire: Valeo Systèmes d'Essuyage, 78322 Le Mesnil Saint Denis (FR)
(72) Inventeur: HOUSSAT, Stephane, 78322 LE MESNIL SAINT DENIS (FR); GAUCHER, Vincent, 78322 LE MESNIL SAINT DENIS (FR); POTON, Eric, 78322 LE MESNIL SAINT DENIS (FR)
(74) Mandataire: Valeo Visibility

(56) Documents cités:
- DE-A1- 102009 029 469
- US-A1- 2015 089 764
- US-B1- 8 707 506

## Description

La présente invention concerne le domaine des essuie-glaces pour véhicule, et plus particulièrement les dispositifs de connexion permettant de connecter un balai d'essuyage à un bras d'entraînement.

Les systèmes d'essuyage pour véhicule sont conçus pour retirer, par balayage, les liquides et salissures qui pourraient perturber la vision d'un conducteur. Ces systèmes d'essuyage comprennent en général un bras d'entraînement, qui effectue un mouvement de va-et-vient angulaire, et des balais d'essuyage allongés équipés de lames racleuses réalisées en une matière élastique. La lame racleuse frotte contre le pare-brise et évacue ces liquides et salissures en les balayant en dehors du champ de vision du conducteur.

Le balai d'essuyage est rattaché au bras d'entraînement par un dispositif de connexion qui comprend un connecteur et un adaptateur. Le connecteur est une pièce qui est solidarisée au balai d'essuyage et qui est en général solidaire de la lame racleuse. L'adaptateur est une pièce qui est interposée entre le bras d'entraînement et le connecteur, en étant conformé pour s'engager dans une chape du bras d'entraînement. Connecteur et adaptateur coopèrent ensuite pour permettre la liaison articulée et la fixation du balai d'essuyage sur le bras d'entraînement, formant ainsi le dispositif de connexion du balai d'essuyage au bras d'entraînement.

La liaison articulée entre le connecteur et l'adaptateur comprend au moins un axe transversal de pivotement du connecteur vis-à-vis de l'adaptateur, qui est également un axe de pivotement du balai d'essuyage vis-à-vis du bras d'entraînement. L'un des organes, par exemple le connecteur, comprend en général une forme sensiblement cylindrique qui forme un pivot et qui est reçu dans un logement de forme complémentaire de l'autre organe, ici l'adaptateur.

Un adaptateur permet d'associer un balai d'essuyage à un type particulier de chape ou de bras d'entraînement et il existe plusieurs variétés de chapes. Ces variétés sont proches en apparence mais diffèrent les unes des autres par leurs dimensions, en particulier par leurs largeurs ou dimensions latérales. Elles varient également par les positions des orifices destinés à coopérer avec un bouton poussoir de verrouillage de l'adaptateur.

Il existe ainsi différents adaptateurs, de façon à pouvoir associer un balai d'essuyage donné à plusieurs chapes et par extension à plusieurs bras d'entraînement. Le document US 2015/0089764 A1 montre un dispositif de connexion tel que connu dans l'état de la technique.

Une combinaison de plusieurs adaptateurs peut cependant entraîner des complications lors de l'utilisation d'un système d'essuyage intégrant cette combinaison. En effet, une telle combinaison des différents adaptateurs nécessite un jeu pour leur imbrication, ce jeu pouvant être retrouvé lors du montage des adaptateurs dans la chape du bras d'entraînement. En raison d'un tel jeu le balai d'essuyage peut alors, lorsqu'il est associé à la combinaison d'adaptateurs et au bras d'entraînement, osciller de façon préjudiciable et ainsi entraver le fonctionnement du système d'essuyage.

Par ailleurs, la combinaison de différents adaptateurs induit un surplus de matière, qui entraîne une augmentation non négligeable du poids total du système d'essuyage.

La présente invention résout ces problèmes techniques en proposant un dispositif de connexion qui limite le jeu entre la combinaison d'adaptateurs et le bras d'entraînement, grâce à un dégagement de matière présent sur une paroi latérale de l'un de ces adaptateurs. Un dispositif de connexion selon l'invention permet une tenue améliorée du balai d'essuyage, limitant ainsi les oscillations intempestives.

En outre, la présente invention présente des avantages liés au conditionnement et à l'utilisation des adaptateurs. Les formes de ces adaptateurs entraînant une réduction de la matière plastique nécessaire à leur fabrication, l'encombrement ainsi que le poids de ces adaptateurs sont donc réduits.

Un objet de la présente invention concerne ainsi un dispositif de connexion entre un balai d'essuyage et un bras d'entraînement pour véhicule, comprenant un adaptateur de base et au moins un premier adaptateur, cet adaptateur de base étant équipé d'au moins un organe de pivotement destiné à le relier à un connecteur, l'adaptateur de base étant configuré pour relier ce connecteur à un premier type de bras d'entraînement, l'adaptateur de base et le premier adaptateur ayant chacun une section en U formée de deux parois latérales jointes par une paroi supérieure. Selon l'invention, au moins une paroi latérale de l'adaptateur de base comprend au moins un dégagement qui reçoit une paroi latérale du premier adaptateur.

Le dispositif de connexion comprend donc un adaptateur de base et au moins un adaptateur complémentaire de cet adaptateur de base, ici un premier adaptateur.

Ces adaptateurs participent à relier un connecteur à un type particulier de bras d'entraînement. Les adaptateurs peuvent relier le connecteur au type particulier de bras d'entraînement directement ou bien faire intervenir dans cette liaison d'autres composants, par exemple un deuxième adaptateur complémentaire.

Les adaptateurs présentent des sections en forme de U, facilitant leur combinaison. Cette section en U est formée par une paroi supérieure, qui assure une liaison entre deux parois latérales. Ce sont ces parois latérales de l'adaptateur de base qui présentent le dégagement selon l'invention, qui reçoit la paroi latérale du premier adaptateur. Ce dégagement permet notamment de limiter le jeu existant auparavant entre le dispositif de connexion et le bras d'entraînement.

L'adaptateur de base comprend un organe de pivotement le reliant au connecteur, ce dernier assurant la liaison du dispositif de connexion au balai d'essuyage. L'organe de pivotement constitue une articulation qui assure la rotation du connecteur par rapport à l'adaptateur de base. Lorsque le connecteur est solidaire d'un balai d'essuyage, ce balai d'essuyage peut ainsi pivoter par rapport à l'adaptateur et au bras d'entraînement auquel cet adaptateur est relié. De ce fait, le balai d'essuyage peut épouser la surface du pare-brise du véhicule qu'il équipe, afin de le balayer d'une façon satisfaisante.

Avantageusement, le dispositif de connexion comprend deux dégagements, ces dégagements étant respectivement disposés sur chaque paroi latérale de l'adaptateur de base.

Selon une caractéristique de l'invention, le dégagement est ouvert sur un environnement extérieur de l'adaptateur de base. Cet environnement extérieur de l'adaptateur de base est opposé à son logement interne, qui correspond au volume défini entre sa paroi supérieure et ses parois latérales.

Selon l'invention, chaque paroi latérale de l'adaptateur de base et du premier adaptateur comprend des zones d'appui, ces zones d'appui étant des bandes rectangulaires faisant saillie des faces externes des parois latérales. Chaque paroi latérale comprend une face interne et une face externe, la face interne étant celle qui délimite le logement interne de l'adaptateur et la face externe étant la face opposée à la face interne, c'est-à-dire celle qui fait face à l'environnement extérieur de l'adaptateur. Les faces externes comportent des zones d'appui faisant saillie depuis ces faces externes.

Selon une autre caractéristique, le dégagement est délimité longitudinalement par les zones d'appui de l'adaptateur de base. On comprend ainsi que selon une direction longitudinale de l'adaptateur de base, qui correspond à sa direction d'allongement, les zones d'appui participent à la délimitation du dégagement. Ce dégagement est donc compris entre deux zones d'appui.

Selon une caractéristique de l'invention, les zones d'appui du premier adaptateur, sont disposées longitudinalement à ses extrémités. Ces zones d'appui sont ainsi au voisinage des extrémités longitudinales du premier adaptateur.

Selon une caractéristique, une combinaison entre l'adaptateur de base et le premier adaptateur est apte à être associée à un deuxième type de bras d'entraînement, structurellement différent du premier type de bras d'entraînement. Le deuxième type de bras d'entraînement est un type de bras d'entraînement qui est structurellement différent du premier type de bras d'entraînement auquel est associé l'adaptateur de base.

Selon une caractéristique, le dispositif de connexion comprend un deuxième adaptateur, une combinaison entre l'adaptateur de base, le premier adaptateur et ce deuxième adaptateur étant apte à être associée à un troisième type de bras d'entraînement, structurellement différent du premier type et du deuxième type de bras d'entraînement. Ce troisième type de bras d'entraînement est un type de bras d'entraînement structurellement différent à la fois du premier type de bras d'entraînement et du deuxième type de bras d'entraînement. Le deuxième adaptateur correspond à un deuxième adaptateur complémentaire de l'adaptateur de base. Ce deuxième adaptateur se distingue du premier adaptateur au moins en ce qu'il comprend une patte courbée qui se loge à l'intérieur d'une tête de l'adaptateur de base.

Selon un aspect de l'invention, au moins deux adaptateurs s'imbriquent l'un dans l'autre. Une telle imbrication se traduit par le fait que les adaptateurs, qui sont des pièces sensiblement en forme de U, peuvent s'emboîter les uns dans les autres. Un adaptateur en U peut ainsi recouvrir un autre adaptateur en U, qui peut lui-même recouvrir encore un autre adaptateur en U, notamment l'adaptateur de base. Dans un mode de réalisation, l'adaptateur de base est couvert par au moins un adaptateur complémentaire, notamment par le premier adaptateur qui lui-même peut être couvert par le deuxième adaptateur.

Avantageusement, les adaptateurs présentent des organes de verrouillage participant à sécuriser l'imbrication des adaptateurs l'un dans l'autre. De tels organes de verrouillage peuvent par exemple être des butées ou des dents, qui ont notamment pour objectif de retenir le premier adaptateur par rapport à l'adaptateur de base, ou encore le deuxième adaptateur par rapport à cet adaptateur de base

Selon une caractéristique de l'invention, le dispositif de connexion, notamment l'un et/ou l'autre des adaptateurs, comprend au moins une butée et un organe de verrouillage destinés à solidariser l'adaptateur par rapport au bras d'entraînement auquel il est destiné à s'associer. L'adaptateur et le bras d'entraînement sont ainsi solidarisés l'un à l'autre, la butée et l'organe de verrouillage empêchant la translation du bras d'entraînement par rapport à l'adaptateur. L'organe de verrouillage peut par exemple être un bouton poussoir, une languette ou encore des jambes de l'adaptateur.

Selon une caractéristique de l'invention, l'organe de verrouillage est disposé sur une paroi supérieure de l'adaptateur. L'organe de verrouillage peut ainsi être disposé sur la paroi supérieure de l'adaptateur de base ou sur la paroi supérieure de l'adaptateur complémentaire. L'organe de verrouillage est disposé sur la paroi supérieure notamment en faisant saillie de celle-ci.

L'invention concerne en outre un balai d'essuyage comprenant un dispositif de connexion tel que décrit dans le présent document.

L'invention porte enfin sur un système d'essuyage comprenant un bras d'entraînement porteur d'un balai d'essuyage comprenant un dispositif de connexion, le balai d'essuyage étant relié au bras d'entraînement par l'intermédiaire du dispositif de connexion décrit ci-dessus. L'adaptateur de base et le premier adaptateur sont alors destinés à venir au contact d'une chape du bras d'entraînement auquel ils sont destinés à s'associer.

D'autres caractéristiques, détails et avantages de l'invention ressortiront plus clairement à la lecture de la description qui suit d'une part, et d'un exemple de réalisation donné à titre indicatif et non limitatif en référence aux dessins annexés d'autre part, sur lesquels :
[Fig. 1] présente, schématiquement, une vue en perspective d'un système d'essuyage dans lequel un dispositif de connexion selon l'invention relie un balai d'essuyage à un bras d'entraînement ;
[Fig. 2] illustre une partie d'un dispositif de connexion selon une vue de côté en éclaté, avec un adaptateur de base, un premier adaptateur, un deuxième adaptateur et un connecteur ;
[Fig. 3] est une vue en perspective du dispositif de connexion de la figure 1, selon une vue de dessus ;
[Fig. 4] est une autre vue en perspective du dispositif de connexion de la figure 1, selon une vue de côté ;
[Fig. 5] est une vue en perspective de dessous du dispositif de connexion de la figure 1 associé à un bras d'entraînement ;
[Fig. 6] est une vue en perspective d'un dispositif de connexion comprenant l'adaptateur de base, le premier adaptateur et le deuxième adaptateur ;
[Fig. 7] est une vue en perspective de dessous du dispositif de connexion de la figure 6 associé à un bras d'entraînement.

Sur les figures, les éléments communs à plusieurs figures conservent la même référence.

Dans la description détaillée qui va suivre, les dénominations « longitudinale », « transversale » et « verticale » se réfèrent à l'orientation du dispositif de connexion selon l'invention. Une direction longitudinale correspond à une direction principale d'allongement du balai d'essuyage duquel le dispositif de connexion est rendu solidaire, cette direction longitudinale étant parallèle à un axe longitudinal L d'un repère L, V, T illustré sur les figures. Une direction transversale correspond à une direction dans laquelle s'inscrit l'axe de rotation de l'organe de pivotement entre l'adaptateur de base et le connecteur du dispositif de connexion, cette direction transversale étant parallèle à un axe transversal T du repère L, V, T et cet axe transversal T étant perpendiculaire à l'axe longitudinal L. Enfin, une direction verticale correspond à une direction parallèle à un axe vertical V du repère L, V, T, cet axe vertical V étant perpendiculaire à l'axe longitudinal L et à l'axe transversal T.

En outre, les dénominations « inférieure » et « supérieure » concernant les éléments du dispositif de connexion s'entendent relativement à l'éloignement de ces éléments du balai d'essuyage, une extrémité inférieure de tels éléments correspondant à l'extrémité disposée au voisinage de ce balai d'essuyage tandis qu'une extrémité supérieure correspond à l'extrémité disposée à distance du balai d'essuyage.

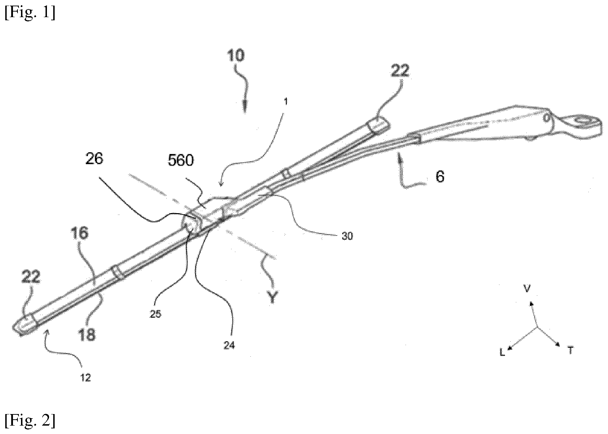

La figure 1 illustre schématiquement un système d'essuyage 10 selon l'invention, comportant un balai d'essuyage 12 et un bras d'entraînement 6 du balai d'essuyage 12. Le balai d'essuyage 12 comprend un corps longitudinal 16, une lame d'essuyage 18, en général en caoutchouc, et au moins une vertèbre, non visible, qui rigidifie la lame d'essuyage 18 et favorise son application sur un pare-brise de véhicule.

Le balai d'essuyage 12 schématiquement représenté comprend en outre des embouts d'extrémité ou agrafes d'accrochage 22 de la lame d'essuyage 18 et de la vertèbre sur le corps longitudinal 16, ces embouts d'extrémité 22 étant situés à chacune des extrémités longitudinales du corps longitudinal 16.

Le balai d'essuyage 12 porte sensiblement en son milieu un dispositif de connexion 1 selon l'invention. Ce dispositif de connexion 1 comprend au moins deux adaptateurs. Ces adaptateurs sont ici un adaptateur de base 25 et un adaptateur complémentaire, ici un premier adaptateur 26.

L'adaptateur de base 25 et le premier adaptateur 26 participent à relier un connecteur 24 à un type particulier de bras d'entraînement, ici un deuxième type de bras d'entraînement 6. L'adaptateur de base 25 et le premier adaptateur 26 sont montés sur le connecteur 24 de façon à garder un degré de liberté en pivotement autour d'un axe d'articulation Y qui est un axe transversal sensiblement perpendiculaire à l'axe longitudinal du balai d'essuyage 12. Ce degré de liberté autorise un pivotement du balai d'essuyage 12 vis-à-vis du bras d'entraînement 6 et permet ainsi au balai d'essuyage 12 de suivre la courbure du pare-brise lors de ses déplacements. L'adaptateur de base 25 et le premier adaptateur 26 peuvent être désolidarisés du bras d'entraînement 6, par exemple par appui sur un bouton d'actionnement, tel qu'un bouton poussoir porté par l'adaptateur de base 25.

Le bras d'entraînement 6 est entraîné par un moteur, non représenté, pour suivre un mouvement angulaire de va-et-vient permettant d'évacuer l'eau, et éventuellement d'autres éléments indésirables recouvrant le pare-brise. L'adaptateur de base 25 et le premier adaptateur 26 assurent la liaison du balai d'essuyage 12 au bras d'entraînement 6. Plus particulièrement, ils participent à la liaison d'une chape 560 du bras d'entraînement 6, qui peut être formée d'un seul tenant avec le bras d'entraînement 6 ou encore être rapportée et fixé sur une tige de celui-ci.

La chape 560 a une forme allongée selon une direction générale sensiblement parallèle à la direction longitudinale du balai d'essuyage 12. La chape 560 se prolonge à l'une de ses extrémités longitudinales par une partie de liaison 30 à la tige du bras d'entraînement 6.

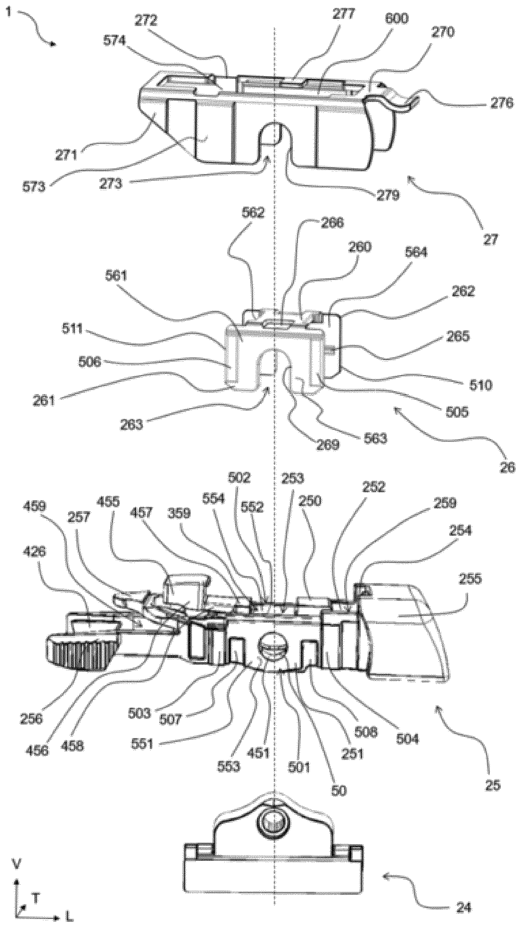

La figure 2 correspond à une représentation en éclaté d'une vue de côté d'un dispositif de connexion 1 selon l'invention, avec ici un adaptateur de base 25, un premier adaptateur 26 et un deuxième adaptateur 27, ce dispositif de connexion 1 étant destiné à s'associer au connecteur 24. Ce premier adaptateur 26 et ce deuxième adaptateur 27 sont des adaptateurs complémentaires, destinés à être combinés avec l'adaptateur de base 25.

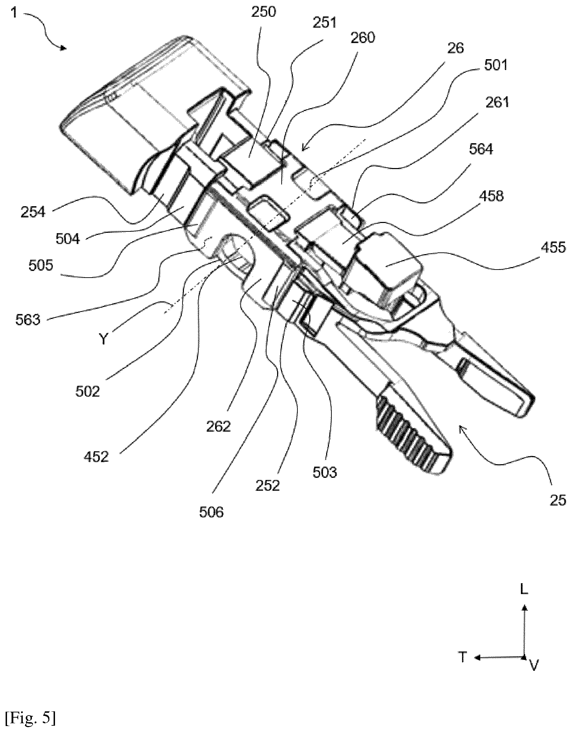

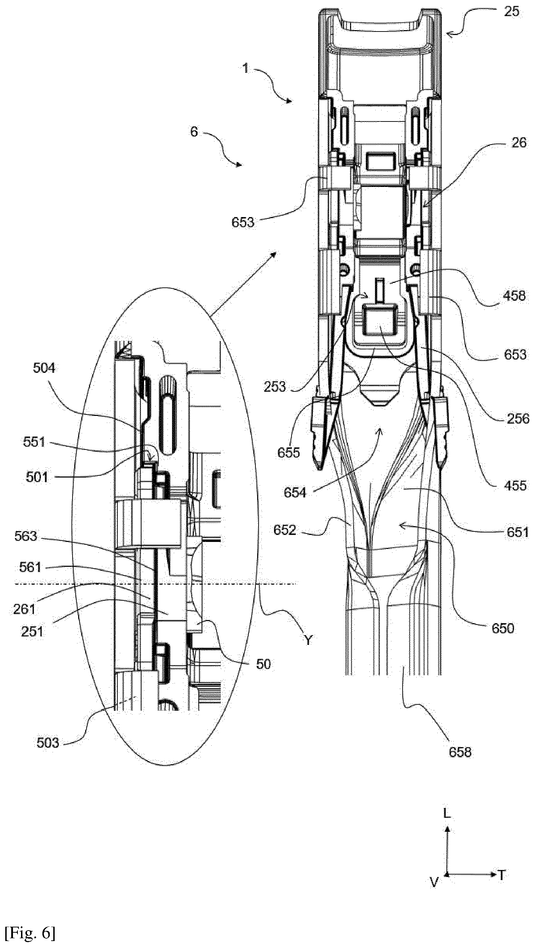

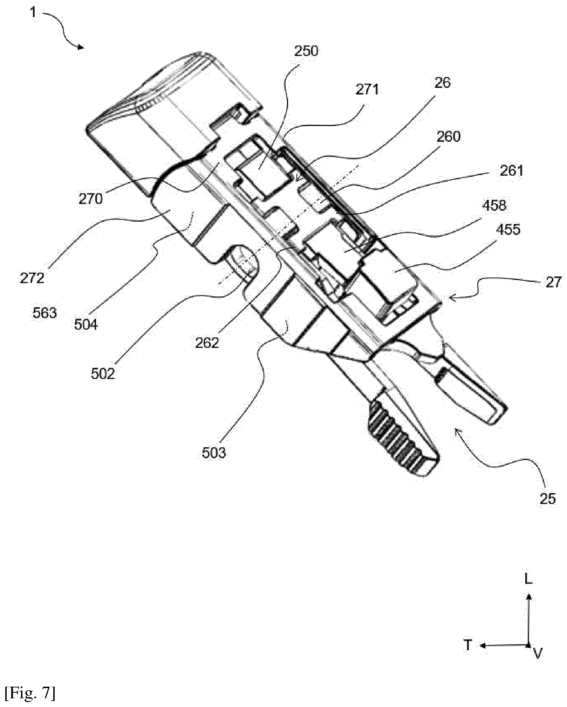

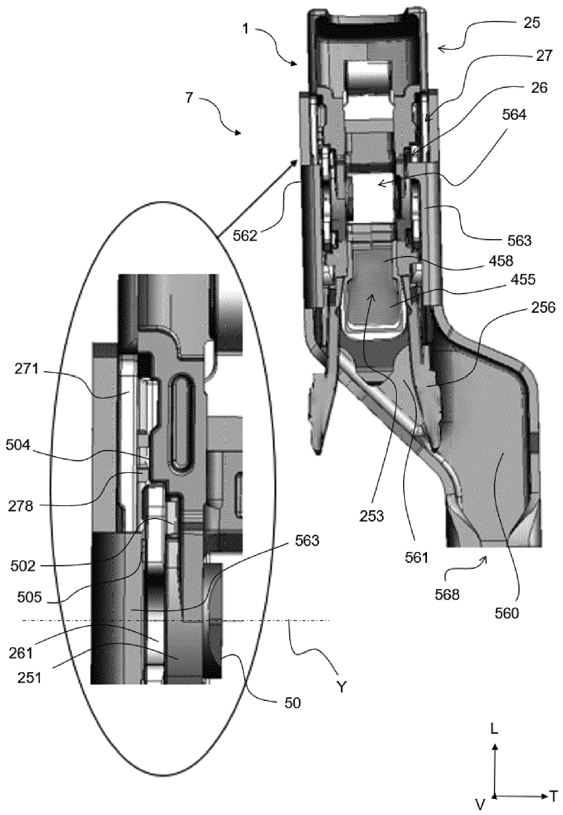

Lorsqu'il est utilisé seul, c'est-à-dire sans adaptateur complémentaire, l'adaptateur de base 25 peut s'associer à un premier type de bras d'entraînement, non représenté. Lorsqu'il est combiné au premier adaptateur 26 pour former un dispositif de connexion 1 selon l'invention, la combinaison entre ces deux adaptateurs 25 et 26 peut s'associer à un deuxième type de bras d'entraînement 6, représenté aux figures 1 et 5, qui est structurellement différent du premier type de bras d'entraînement. Enfin, lorsque l'adaptateur de base 25 est associé à la fois à un premier adaptateur 26 et à un deuxième adaptateur 27, la combinaison entre ces trois adaptateurs 25, 26, 27 peut s'associer à un troisième type de bras d'entraînement 7, représenté en figure 7, ce troisième type de bras d'entraînement se distinguant structurellement du premier type et du deuxième type de bras d'entraînement 6.

L'adaptateur de base 25 s'étend principalement selon la direction longitudinale. Cet adaptateur de base 25 présente un corps 254 qui comprend une première paroi latérale 251 et une deuxième paroi latérale 252 sensiblement parallèles entre elles, à distance l'une de l'autre. Ces parois 251, 252 sont reliées entre elles par une paroi supérieure 250 qui leur est sensiblement perpendiculaire. L'adaptateur de base 25 présente ainsi une section en forme de U. Les parois 250, 251, 252 de cet adaptateur de base 25 présentent une forme allongée selon la direction longitudinale, et elles définissent entre elles un logement interne 253 destiné à accueillir le connecteur 24. Chacune des parois latérales 251 et 252 comporte respectivement une face externe 551 et 552 ainsi qu'une face interne 553 et 554. Ces faces internes 553 et 554 sont celles qui font face au logement interne 523, tandis que les faces externes 551 et 552 sont orientées vers un environnement extérieur à l'adaptateur de base 25.

Selon l'invention, au moins une paroi latérale 251, 252 comprend au moins un dégagement 501, 502. Selon le mode de réalisation représenté ici, chacune des parois latérales 251 et 252 comprend respectivement un dégagement 501 et 502. Ce dégagement est un renfoncement dans les parois latérales 251 et 252. Un tel dégagement 501, 502 est tourné vers l'environnement extérieur à l'adaptateur de base 25 ; on comprend ainsi que ce dégagement 501, 502 est disposé sur les faces externes 551 et 552 des parois latérales 251 et 252, et plus particulièrement qu'il est creusé dans celles-ci.

Les parois latérales 251 et 252 comprennent en outre chacune deux zones d'appui, seules les zones d'appui 503 et 504 de la paroi latérale 251 étant visibles sur la figure 2. Ces zones d'appui 503 et 504 sont des bandes rectangulaires faisant saillie des faces externes 551 et 552 de ces parois latérales 251 et 252. Ces zones d'appui 503 et 504, qui s'étendent donc en direction de l'environnement externe de l'adaptateur de base 25, permettent notamment de délimiter longitudinalement les dégagements 501 et 502. De telles zones d'appui 503 et 504 peuvent entrer en contact avec le deuxième adaptateur 27 lorsque le dispositif de connexion 1 est associé à un tel adaptateur complémentaire, ou avec la chape 650 un bras d'entraînement 6 lorsque le dispositif de connexion 1 ne comprend pas le deuxième adaptateur 27.

À une de ses extrémités longitudinales, le corps 254 de l'adaptateur de base 25 est relié à une tête 255, dont les dimensions verticales et transversales sont supérieures à celles du corps 254 de l'adaptateur de base 25. On comprend ainsi que la tête 255 s'étend au-delà d'un plan longitudinal et transversal dans lequel s'étend la paroi supérieure 250, et au-delà d'un plan longitudinal et vertical dans lequel s'étendent les parois latérales 251 et 252. La tête 255 joue notamment le rôle d'organe de verrouillage. En effet, lorsque le balai d'essuyage 12 est assemblé sur le bras d'entraînement 6 par l'intermédiaire du dispositif de connexion 1 comme illustré sur la figure 1, cette tête 255 forme une butée pour la chape 560, empêchant ainsi la translation de celle-ci au-delà du corps 254 de l'adaptateur de base 25.

À une autre de ses extrémités longitudinales, la paroi supérieure 250 de l'adaptateur de base 25 se rétrécit de façon à former une pointe 257, qui est en porte-à-faux par rapport au corps 255.

Au niveau de cette autre extrémité longitudinale, le corps 254 de l'adaptateur de base 25 et plus particulièrement les parois latérales 251, 252 se poursuivent chacune par une jambe 256 déformable élastiquement. Ces jambes 256 peuvent ainsi être rapprochées l'une de l'autre par déformation élastique. Les jambes 256 sont sensiblement symétriques selon un plan de symétrie s'étendant dans des directions longitudinale et verticale, situé à équidistance de la première paroi latérale 251 et de la deuxième paroi latérale 252. Chaque jambe 256 présente en outre une portion de verrouillage 426, conformée pour coopérer avec des encoches disposées sur la chape 560 afin de verrouiller l'assemblage de l'adaptateur de base 25 avec cette dernière, constituant ainsi un autre moyen de verrouillage adapté au type de balai d'entraînement spécifique de l'adaptateur de base 25.

La paroi supérieure 250 est percée de trois ouvertures, avec une première ouverture 259, une deuxième ouverture 359 et une troisième ouverture 459, alignées selon la direction longitudinale et donnant accès au logement interne 253. La première ouverture 259 permet l'engagement d'une patte pouvant équiper la chape d'un bras d'entraînement. La troisième ouverture 459, qui est au voisinage des jambes 256, est en partie occupée par une languette 458. Cette languette 458 s'étend principalement selon la direction longitudinale et présente une extrémité fixe 457 à distance des jambes 256, qui est reliée à la paroi latérale 251 et à la paroi latérale 252 par un pontet, et une extrémité libre 456 étant mobile au voisinage des jambes 256. La languette 458 est déformable élastiquement et son extrémité libre 456 porte un bouton poussoir 455. Au repos, c'est-à-dire sans contrainte, la languette 458 est disposée d'une façon telle que le bouton poussoir 455 se situe au-dessus du plan dans lequel s'étend la paroi supérieure 250. Lors du montage de l'adaptateur de base 25 dans la chape 560, le bouton poussoir 455 s'engage par encliquetage élastique dans une ouverture correspondante de la chape 560 afin de verrouiller l'adaptateur de base 25 vis-à-vis de cette dernière.

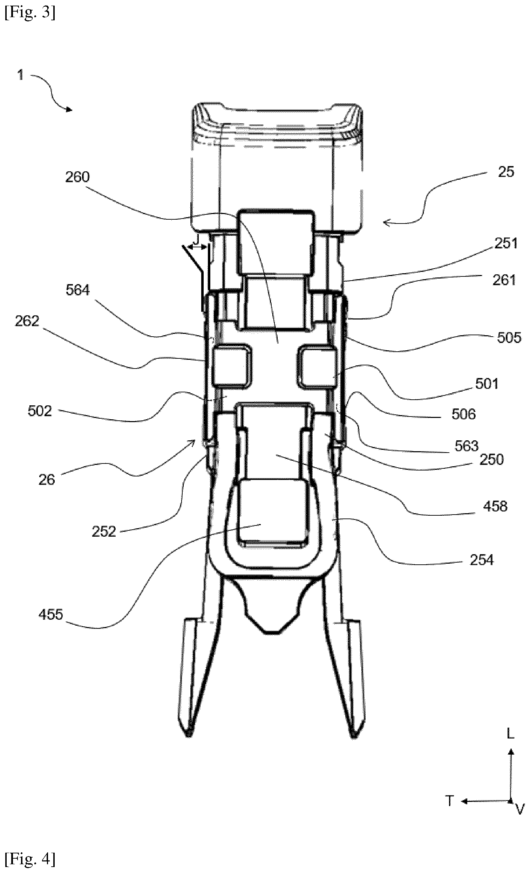

Les parois latérales 251 et 252 de l'adaptateur de base 25 sont par ailleurs équipées respectivement d'un orifice traversant 451 et 452, ouvert sur le logement interne 253, qui s'étend depuis les faces externes 551 et 552 jusqu'aux faces internes 553 et 554 de ces parois latérales 251 et 252. L'orifice 451 est visible en figure 2, tandis que l'orifice 52 est illustré sur la figure 4. Les orifices 451 et 452 définissent un axe Y de pivotement de l'adaptateur de base 25 relativement au connecteur 24, et par extension du balai d'essuyage 12 relié à l'adaptateur de base 25 relativement au bras d'entraînement relié au connecteur 24. L'adaptateur de base 25 comprend au moins un organe de pivotement 50 le reliant mécaniquement au connecteur 24, au niveau de ses orifices 451 et 452. Cet organe de pivotement 50 constitue une articulation qui assure la rotation du connecteur 24 par rapport à l'adaptateur de base 25. Ainsi, lorsque le connecteur 24 est solidaire d'un balai d'essuyage 12 comme c'est le cas sur la figure 1, par exemple par sertissage, ce balai d'essuyage 12 peut pivoter par rapport à l'adaptateur de base 25 et au bras d'entraînement auquel cet adaptateur de base 25 est relié. De ce fait, le balai d'essuyage 12 peut lors de ses déplacements suivre parfaitement la surface courbée du pare-brise du véhicule qu'il équipe.

Le premier adaptateur 26 est une pièce dont une section transversale est sensiblement en forme de U, comprenant une paroi supérieure 260 ainsi qu'une première paroi latérale 261 et une deuxième paroi latérale 262. Ces parois 260, 261 et 262 définissent un logement interne 263, ce logement interne 263 étant notamment apte à recevoir un autre adaptateur, par exemple l'adaptateur de base 25. La paroi supérieure 260 s'étend principalement dans un plan transversal-longitudinal, tandis que les parois latérales 261 et 262 s'étendent dans des plans longitudinaux-verticaux parallèles et distincts. Les parois latérales 261 et 262 sont ainsi parallèles entre elles et perpendiculaires à la paroi supérieure 260. Par ailleurs, le premier adaptateur 26 est sensiblement symétrique selon un plan de symétrie s'étendant dans des directions longitudinale et verticale, situé à équidistance de la première paroi latérale 261 et de la deuxième paroi latérale 262.

La paroi supérieure 260 ne s'étend pas sur toute la longueur des parois latérales 261 et 262 ; autrement dit, la paroi supérieure 260 ne s'étend pas d'une extrémité longitudinale 510 à l'autre extrémité longitudinale 511 du premier adaptateur 26. En effet, ce premier adaptateur 26 présente des dépressions sur la paroi supérieure 260, au voisinage de chaque extrémité longitudinale 510 et 511 du premier adaptateur 26. En vue de dessus, le premier adaptateur 26 présente donc une forme de H.

Les parois latérales 261 et 262 présentent des faces internes 563 et 564, qui sont celles qui sont en regard du logement interne 263. Ces faces internes 563 et 564, qui sont donc opposées l'une à l'autre, portent des butées 265, qui font saillie depuis les faces internes 563 et 564 et s'étendent dans le logement interne 263. Ces butées 265 sont des organes de verrouillage qui participent notamment à maintenir en place le premier adaptateur 26 lorsque celui-ci est assemblé à un autre adaptateur, par exemple l'adaptateur de base 25, sécurisant ainsi l'assemblage de plusieurs pièces. À cet effet, les butées 265 viennent au contact des gorges 507 et 508 creusées dans les faces externes 551 et 552 des parois latérales 251 et 252 de l'adaptateur de base 25, empêchant la translation verticale du premier adaptateur 26 par rapport à l'adaptateur de base 25.

Chacune des parois latérales 261 et 262 comporte également une face externe 561 et 562. Ces faces externes 561 et 562 sont orientées vers un environnement extérieur au premier adaptateur 26.

Les parois latérales 261 et 262 comprennent en outre des zones d'appui 505 et 506, ces zones d'appui 505 et 506 étant des bandes rectangulaires faisant saillie des faces externes 561 et 562 de ces parois latérales 261 et 262. Ces zones d'appui 505 et 506 s'étendent donc en direction de l'environnement externe du premier adaptateur 26. Les zones d'appui 505 et 506 du premier adaptateur 26 sont respectivement disposées au voisinage de ses extrémités longitudinales 510 et 511. Ces zones d'appui sont destinées à venir au contact du deuxième adaptateur 27 lorsque le dispositif de connexion 1 comprend un tel adaptateur complémentaire, ou à défaut au contact de la chape 650 du deuxième type de bras d'entraînement 6 lorsque le dispositif de connexion 1 ne comprend pas de deuxième adaptateur 27.

La paroi supérieure 260 présente deux cavités 266 de formes carrées, disposées au voisinage des parois latérales 261 et 262. Ces cavités 266 sont des renfoncements dans la paroi supérieure 260, qui s'étendent depuis une face supérieure de celle-ci vers le logement interne 263.

Chacune des parois latérales 261 et 262 présente une embrasure 269, qui s'étend depuis un bord libre de cette paroi latérale en direction de la paroi supérieure du premier adaptateur 26. L'embrasure 269 de la paroi latérale 261 est symétrique à l'embrasure 269 de la paroi latérale 262 selon le plan de symétrie. Ces embrasures 269, dont la forme est celle d'un arc de cercle, sont aptes à recevoir un arbre d'un bras d'entraînement.

Le deuxième adaptateur 27 est également une pièce dont une section transversale est sensiblement en forme de U. Le deuxième adaptateur 27 comporte une paroi supérieure 270 ainsi qu'une première paroi latérale 271 et une deuxième paroi latérale 272. La paroi supérieure 270 s'étend principalement dans un plan transversal-longitudinal, tandis que les parois latérales 271 et 272 s'étendent principalement dans des plans longitudinaux-verticaux parallèles et distincts. Les parois latérales 271 et 272 sont ainsi parallèles entre elles et perpendiculaires à la paroi supérieure 270. Ces parois 270, 271 et 272 définissent un logement interne 273, ce logement interne étant notamment apte à recevoir un autre adaptateur, dans le cas présent le premier adaptateur 26 décrit ci-dessus. Les faces des parois latérales 271 et 272 qui délimitent ce logement interne 273 correspondent aux faces internes 573 et 574.

La paroi supérieure 270 présente un évidement 600 en son centre, de telle sorte que cette paroi supérieure 270 ne constitue qu'un cadre. Au niveau de cet évidement central 600 de la paroi supérieure 270, le logement interne 273 communique avec l'environnement extérieur à l'adaptateur concerné. La paroi supérieure 270 comporte par ailleurs une patte courbée 276, qui s'étend depuis l'une des extrémités longitudinales du deuxième adaptateur 27 et à distance de celle-ci. Cette patte courbée 276 participe à l'assemblage du deuxième adaptateur 27 avec d'autres pièces, et notamment avec d'autres adaptateurs. Cette patte courbée 276 peut par exemple être reçue par une portion interne courbée de la tête 255 de l'adaptateur de base 25, une telle portion interne courbée n'étant pas visible sur la figure 2.

Les faces internes 573 et 574, qui sont celles qui sont en regard du logement interne 273, sont opposées l'une à l'autre et portent des butées, non visibles, qui font saillie des faces internes 573 et 574 et s'étendent dans le logement interne 273. Ces butées permettent notamment de solidariser le deuxième adaptateur 27 à un autre adaptateur, par exemple l'adaptateur de base 25, empêchant la translation de ce deuxième adaptateur 27 selon une direction verticale.

Chacune des parois latérales 271 et 272 présente une embrasure 279, qui s'étend depuis l'extrémité inférieure du deuxième adaptateur 27 en direction de son extrémité supérieure. L'embrasure 279 de la paroi latérale 271 est symétrique à l'embrasure 279 de la paroi latérale 272 selon le plan de symétrie. Ces embrasures 279, dont la forme est celle d'un arc de cercle, sont aptes à recevoir un arbre d'un bras d'entraînement.

L'une des parois latérales 271 ou 272 porte au moins une excroissance 277, par exemple de forme carrée, qui fait saillie de cette paroi latérale 271 ou 272, dans le plan de la paroi supérieure du deuxième adaptateur. Cette excroissance 277 est constituée par un prolongement de matière en direction de l'autre paroi latérale 271 ou 272, autrement dit, en direction de la paroi latérale 271 ou 272 à partir de laquelle elle ne fait pas saillie. L'excroissance 277 entraîne donc une asymétrie du deuxième adaptateur 27 selon un plan s'étendant dans des directions longitudinale et verticale, situé à équidistance de la première paroi latérale 271 et de la deuxième paroi latérale 272.

Selon un aspect de l'invention, au moins deux de ces différents adaptateurs 25, 26 et 27 s'imbriquent l'un dans l'autre. Une telle imbrication se traduit par le fait que l'adaptateur de base 25, le premier adaptateur 26 et le deuxième adaptateur 27, qui sont des pièces sensiblement en forme de U, peuvent s'emboîter les uns dans les autres. Un adaptateur en U peut ainsi recouvrir un autre adaptateur en U, qui peut lui-même recouvrir encore un autre adaptateur en U et ainsi de suite.

Lorsque l'adaptateur de base 25 et le premier adaptateur 26 sont associés pour former le dispositif de connexion 1 selon l'invention, tel que visible en figures 4 et 5, le premier adaptateur 26 recouvre partiellement l'adaptateur de base 25 de telle sorte que ses parois latérales 261 et 262 sont placées en regard des parois latérales 251 et 252 de l'adaptateur de base 25. Selon l'invention, les dégagements 501 et 502, visibles en figure 2, qui sont portés par les faces externes 551 et 552 de ces parois latérales 251 et 252 de l'adaptateur de base 25, reçoivent les parois latérales 261 et 262 du premier adaptateur 26, et plus particulièrement les faces internes 563 et 564 de celles-ci.

Les zones d'appui 503 et 504 de l'adaptateur de base 25 sont en retrait par rapport aux zones d'appui 505 et 506 du premier adaptateur 26 ; on comprend ainsi qu'il existe un jeu J entre les parois latérales 251 et 252 de l'adaptateur de base 25 et les parois latérales 261 et 262 du premier adaptateur 26, et plus particulièrement entre les faces externes 551 et 552 des parois latérales 251 et 252 de l'adaptateur de base 25 et les faces internes 563 et 564 des parois latérales 261 et 262 du premier adaptateur 26.

La paroi supérieure 260 du premier adaptateur 26 recouvre la paroi supérieure 250 de l'adaptateur de base 25, ce premier adaptateur 26 reposant sur le corps 254 de l'adaptateur de base 25. Une telle disposition du premier adaptateur 26 laisse accessibles la languette 458 et le bouton poussoir 455 de l'adaptateur de base 25.

Lorsque cet adaptateur de base 25 et ce premier adaptateur 26 sont assemblés, le dispositif de connexion 1 ainsi formé peut être associé à un deuxième type de bras d'entraînement 6. Une telle association est représentée en figure 5.

Le bras d'entraînement 6 comprend une chape 650 formée dans la partie terminale 658 du deuxième type de bras d'entraînement 6. Cette chape 650 se compose notamment d'une paroi longitudinale 651, s'étendant selon la direction longitudinale du bras d'entraînement 6, cette paroi longitudinale 651 étant bordée de deux flancs latéraux 652 qui lui sont perpendiculaires. La chape 650 est pourvue de bords pliés 653 ménagés à l'extrémité libre de chacun des flancs latéraux 652, ces bords pliés 653 comprenant une paire de bords pliés courts et une paire de bords pliés longs. Ces bords pliés 653 sont des organes de rétention du dispositif de connexion 1 au sein du deuxième type de bras d'entraînement 6, empêchant une translation verticale de l'adaptateur de base 25 et du premier adaptateur 26.

Lors de l'association du dispositif de connexion 1 comprenant cet adaptateur de base 25 et ce premier adaptateur 26 au deuxième type de bras d'entraînement 6, le dispositif de connexion 1 est inséré par coulissement longitudinal au sein d'une cavité de réception 654 délimitée dans la chape 650 par la paroi longitudinale 651, les flancs latéraux 652 et les bords pliés 653. À cet effet, les jambes 256 de l'adaptateur de base 25 sont déformées élastiquement afin d'être rapprochées pour pouvoir se loger dans la cavité de réception 654. De la même façon, la languette 458 et le bouton poussoir 455 de l'adaptateur de base 25 s'escamotent, et sont ainsi enfoncés vers le logement interne 253 de l'adaptateur de base 25. La translation longitudinale du dispositif de connexion 1 est bloquée lorsque le bouton poussoir 455 entre dans un orifice 655, percé dans la paroi longitudinale 651 de la chape 650, cet orifice étant apte à le recevoir. Un jeu entre le dispositif de connexion 1 et la chape 650 est ainsi limité, puisque l'adaptateur de base 25 peut venir en butée contre la chape 650 même lorsque cet adaptateur de base 25 est associé au premier adaptateur 26. L'adaptateur de base 25 et le premier adaptateur 26 peuvent ainsi tous deux être au contact de la chape 650, empêchant ainsi le jeu entre le dispositif de connexion 1 et le deuxième type de bras d'entraînement 6.

Lorsque le premier adaptateur 26 et le deuxième adaptateur 27 sont associés au sein du dispositif de connexion 1, comme c'est le cas sur les figures 6 et 7, le premier adaptateur 26 vient se loger dans le logement interne 273 du deuxième adaptateur 27. Les parois latérales 261 et 262 du premier adaptateur 26 sont ainsi en regard des parois latérales 271 et 272 du deuxième adaptateur 27, et plus particulièrement les faces externes 561, 562 des parois latérales 261, 262 du premier adaptateur 26 sont en regard des faces internes 573 et 574 des parois latérales 271 et 272 du deuxième adaptateur 27. La paroi supérieure 260 du premier adaptateur 26 vient se loger dans l'évidement central 600 formé dans la paroi supérieure 270 du deuxième adaptateur 27, de telle sorte que la paroi supérieure 260 n'est recouverte par la paroi supérieure 270 qu'à l'endroit de l'une des deux cavités 266.

Les adaptateurs complémentaires que sont le premier adaptateur 26 et le deuxième adaptateur 27 peuvent être associés à l'adaptateur de base 25. Lorsque ces trois adaptateurs 25, 26 et 27 sont réunis, les faces internes 573 et 574 des parois latérales 271 et 272 du deuxième adaptateur 27 sont plaquées contre les faces externes 561 et 562 des parois latérales 261 et 262 du premier adaptateur 26. Les parois latérales 271 et 272 du deuxième adaptateur 27 présentent en outre des godrons 278, visibles en figure 7, qui viennent en appui sur l'adaptateur de base 25 afin de sécuriser le dispositif de connexion 1.

Lorsque cet adaptateur de base 25, ce premier adaptateur 26 et ce deuxième adaptateur 27 sont imbriqués, le dispositif de connexion 1 peut alors être associé au troisième type de bras d'entraînement 7.

Ce bras d'entraînement 7 comprend une chape 560, formée dans la partie terminale 568 du troisième type de bras d'entraînement 7. Cette chape 560 se compose notamment d'une paroi longitudinale 561, s'étendant selon la direction longitudinale du bras d'entraînement 7, cette paroi longitudinale 561 étant bordée de deux flancs latéraux 562 qui lui sont perpendiculaires. À distance de la paroi longitudinale selon une direction verticale, la chape 560 est pourvue d'un bord plié 563, ménagé à l'extrémité libre de chacun des flancs latéraux 652. Ce bord plié 563 est un organe de rétention du dispositif de connexion 1 au sein du troisième type de bras d'entraînement 7, empêchant une translation verticale de l'adaptateur de base 25, du premier adaptateur 26 et du deuxième adaptateur 27.

Lors de l'association du dispositif de connexion 1 comprenant cet adaptateur de base 25, ce premier adaptateur 26 et ce deuxième adaptateur 27 au troisième type de bras d'entraînement 7, le dispositif de connexion 1 est inséré au sein d'une cavité de réception 564 délimitée dans la chape 560 par la paroi longitudinale 561, les flancs latéraux 562 et le bord plié 563. À cet effet, les jambes 256 de l'adaptateur de base 25 sont déformées élastiquement afin d'être rapprochées pour pouvoir se loger dans la cavité de réception 564. De la même façon, la languette 458 et le bouton poussoir 455 de l'adaptateur de base 25 sont enfoncés vers le logement interne 253 de l'adaptateur de base 25. La translation longitudinale du dispositif de connexion 1 est bloquée lorsque le bouton poussoir 455 débouche dans un orifice, non visible, percé dans la paroi longitudinale 561, cet orifice étant apte à le recevoir.

La présente invention propose ainsi un dispositif de connexion entre un balai d'essuyage et un bras d'entraînement, limite le jeu entre une combinaison d'adaptateurs et le bras d'entraînement grâce à un dégagement de matière disposé sur une paroi latérale de l'un de ces adaptateurs. Un tel dispositif de connexion permet notamment un maintien amélioré du balai d'essuyage.

## Revendications

1. Dispositif de connexion (1) entre un balai d'essuyage (12) et un bras d'entraînement (6, 7) pour véhicule, comprenant un adaptateur de base (25) et au moins un premier adaptateur (26), cet adaptateur de base (25) étant équipé d'au moins un organe de pivotement (50) destiné à le relier à un connecteur (24), l'adaptateur de base (25) étant configuré pour relier ce connecteur (24) à un premier type de bras d'entraînement, l'adaptateur de base (25) et le premier adaptateur (26) ayant chacun une section en U formée de deux parois latérales (251, 252, 261, 262) jointes par une paroi supérieure (250, 260), au moins une paroi latérale (251, 252) de l'adaptateur de base (25) comprenant au moins un dégagement (501, 502) qui reçoit une paroi latérale (261, 262) du premier adaptateur (26), ce dispositif étant **caractérisé en ce que** chaque paroi latérale de l'adaptateur de base et du premier adaptateur (251, 252, 261, 262) comprend des zones d'appui (503, 504, 505, 506), ces zones d'appui étant des bandes rectangulaires faisant saillie des faces externes (551, 552, 561, 562) des parois latérales (251, 252, 261, 262).

2. Dispositif de connexion (1) selon la revendication précédente, comprenant deux dégagements (501, 502), ces dégagements (501, 502) étant respectivement disposés sur chaque paroi latérale (251, 252) de l'adaptateur de base (25).

3. Dispositif de connexion (1) selon l'une quelconque des revendications précédentes, dans lequel le dégagement (501, 502) est ouvert sur un environnement extérieur de l'adaptateur de base (25).

4. Dispositif de connexion (1) selon l'une quelconque des revendications précédentes, dans lequel le dégagement (501, 502) est délimité longitudinalement par les zones d'appui (503, 504) de l'adaptateur de base (25).

5. Dispositif de connexion (1) selon l'une quelconque des revendications précédentes, dans lequel les zones d'appui (505, 506) du premier adaptateur (26), sont disposées longitudinalement à ses extrémités (510, 511).

6. Dispositif de connexion (1) selon l'une quelconque des revendications précédentes, dans lequel une combinaison entre l'adaptateur de base (25) et le premier adaptateur (26) est apte à être associée à un deuxième type de bras d'entraînement (6), structurellement différent du premier type de bras d'entraînement.

7. Dispositif de connexion (1) selon l'une quelconque des revendications précédentes comprenant un deuxième adaptateur (27), une combinaison entre l'adaptateur de base (25), le premier adaptateur (26) et ce deuxième adaptateur (27) étant apte à être associée à un troisième type de bras d'entraînement (7), structurellement différent du premier type et du deuxième type de bras d'entraînement (6).

8. Dispositif de connexion (1) selon l'une quelconque des revendications précédentes en combinaison avec la revendication 7, dans lequel au moins deux adaptateurs (25, 26, 27) s'imbriquent l'un dans l'autre.

9. Dispositif de connexion (1) selon la revendication précédente, dans lequel les adaptateurs (25, 26, 27) présentent des organes de verrouillage (265) participant à sécuriser l'imbrication des adaptateurs (25, 26, 27) l'un dans l'autre.

10. Balai d'essuyage (12) comprenant un dispositif de connexion (1) selon l'une quelconque des revendications précédentes.

11. Système d'essuyage comprenant un bras d'entraînement (6, 7) porteur d'un balai d'essuyage (12) selon la revendication précédente, le balai d'essuyage (12) étant relié au bras d'entraînement (6, 7) par l'intermédiaire du dispositif de connexion (1).

## Patentansprüche

1. Verbindungsvorrichtung (1) zwischen einem Wischblatt (12) und einem Antriebsarm (6, 7) für ein Fahrzeug, welche einen Basisadapter (25) und mindestens einen ersten Adapter (26) umfasst, wobei dieser Basisadapter (25) mit mindestens einem Schwenkorgan (50) ausgestattet ist, das dazu bestimmt ist, ihn mit einem Verbinder (24) zu verbinden, wobei der Basisadapter (25) dafür ausgelegt ist, diesen Verbinder (24) mit einem ersten Typ von Antriebsarm zu verbinden, wobei der Basisadapter (25) und der erste Adapter (26) jeweils einen U-Querschnitt aufweisen, der von zwei Seitenwänden (251, 252, 261, 262) gebildet wird, die durch eine obere Wand (250, 260) verbunden sind, wobei mindestens eine Seitenwand (251, 252) des Basisadapters (25) mindestens eine Aussparung (501, 502) umfasst, die eine Seitenwand (261, 262) des ersten Adapters (26) aufnimmt, wobei diese Vorrichtung **dadurch gekennzeichnet ist, dass** jede Seitenwand des Basisadapters und des ersten Adapters (251, 252, 261, 262) Stützbereiche (503, 504, 505, 506) umfasst, wobei diese Stützbereiche rechteckige Streifen sind, die von den Außenseiten (551, 552, 561, 562) der Seitenwände (251, 252, 261, 262) vorstehen.

2. Verbindungsvorrichtung (1) nach dem vorhergehenden Anspruch, welche zwei Aussparungen (501, 502) umfasst, wobei diese Aussparungen (501, 502) jeweils an einer der Seitenwände (251, 252) des Basisadapters (25) angeordnet sind.

3. Verbindungsvorrichtung (1) nach einem der vorhergehenden Ansprüche, wobei die Aussparung (501, 502) zu einer äußeren Umgebung des Basisadapters (25) offen ist.

4. Verbindungsvorrichtung (1) nach einem der vorhergehenden Ansprüche, wobei die Aussparung (501, 502) in Längsrichtung von den Stützbereichen (503, 504) des Basisadapters (25) begrenzt wird.

5. Verbindungsvorrichtung (1) nach einem der vorhergehenden Ansprüche, wobei die Stützbereiche (505, 506) des ersten Adapters (26) in Längsrichtung an seinen Enden (510, 511) angeordnet sind.

6. Verbindungsvorrichtung (1) nach einem der vorhergehenden Ansprüche, wobei eine Kombination zwischen dem Basisadapter (25) und dem ersten Adapter (26) geeignet ist, einem zweiten Typ von Antriebsarm (6) zugeordnet zu werden, der von dem ersten Typ von Antriebsarm strukturell verschieden ist.

7. Verbindungsvorrichtung (1) nach einem der vorhergehenden Ansprüche, welche einen zweiten Adapter (27) umfasst, wobei eine Kombination zwischen dem Basisadapter (25), dem ersten Adapter (26) und diesem zweiten Adapter (27) geeignet ist, einem dritten Typ von Antriebsarm (7) zugeordnet zu werden, der von dem ersten Typ und von dem zweiten Typ von Antriebsarm (6) strukturell verschieden ist.

8. Verbindungsvorrichtung (1) nach einem der vorhergehenden Ansprüche in Kombination mit Anspruch 7, wobei mindestens zwei Adapter (25, 26, 27) ineinandergreifen.

9. Verbindungsvorrichtung (1) nach dem vorhergehenden Anspruch, wobei die Adapter (25, 26, 27) Verriegelungsorgane (265) aufweisen, die dazu beitragen, das Ineinandergreifen der Adapter (25, 26, 27) zu sichern.

10. Wischblatt (12), welches eine Verbindungsvorrichtung (1) nach einem der vorhergehenden Ansprüche umfasst.

11. Wischsystem, welches einen Antriebsarm (6, 7) umfasst, der ein Wischblatt (12) nach dem vorhergehenden Anspruch trägt, wobei das Wischblatt (12) mit dem Antriebsarm (6, 7) durch eine Verbindungsvorrichtung (1) verbunden ist.

## Claims

1. Connection device (1) providing connection between a wiper blade (12) and a driving arm (6, 7) for a vehicle, comprising a base adapter (25) and at least a first adapter (26), this base adapter (25) being equipped with at least one pivot member (50) intended to connect it to a connector (24), the base adapter (25) being configured to connect this connector (24) to a first type of driving arm, the base adapter (25) and the first adapter (26) each having a U-shaped cross section formed of two lateral walls (251, 252, 261, 262) connected by an upper wall (250, 260), at least one lateral wall (251, 252) of the base adapter (25) comprising at least one clearance (501, 502) which accepts a lateral wall (261, 262) of the first adapter (26), this connection device being **characterized in that** each lateral wall of the base adapter and the first adapter (251, 252, 261, 262) comprises bearing zones (503, 504, 505, 506), these bearing zones being rectangular strips projecting from the external faces (551, 552, 561, 562) of the lateral walls (251, 252, 261, 262).

2. Connection device (1) according to the preceding claim, comprising two clearances (501, 502), these clearances (501, 502) being positioned on each of the lateral walls (251, 252) of the base adapter (25), respectively.

3. Connection device (1) according to either one of the preceding claims, wherein the clearance (501, 502) is open onto an external environment of the base adapter (25).

4. Connection device (1) according to any one of the preceding claims, wherein the clearance (501, 502) is delimited longitudinally by the bearing zones (503, 504) of the base adapter (25).

5. Connection device (1) according to any one of the preceding claims, wherein the bearing zones (505, 506) of the first adapter (26) are positioned longitudinally at the ends (510, 511) thereof.

6. Connection device (1) according to any one of the preceding claims, wherein a combination of the base adapter (25) and the first adapter (26) is able to be associated with a second type of driving arm (6) that is structurally different from the first type of driving arm.

7. Connection device (1) according to any one of the preceding claims, comprising a second adapter (27), a combination of the base adapter (25), the first adapter (26) and this second adapter (27) being able to be associated with a third type of driving arm (7) that is structurally different from the first type and from the second type of driving arm (6).

8. Connection device (1) according to any one of the preceding claims in combination with Claim 7, wherein at least two adapters (25, 26, 27) fit inside one another.

9. Connection device (1) according to the preceding claim, wherein the adapters (25, 26, 27) have locking members (265) that contribute to securing the adapters (25, 26, 27) fitted inside one another.

10. Wiper blade (12) comprising a connection device (1) according to any one of the preceding claims.

11. Wiper system comprising a driving arm (6, 7) bearing a wiper blade (12) according to the preceding claim, the wiper blade (12) being connected to the driving arm (6, 7) by means of the connection device (1).
